# EUROPÄISCHE PATENTSCHRIFT

(11) **EP 2 430 916 B1**
(45) Veröffentlichungstag und Bekanntmachung des Hinweises auf die Patenterteilung: **03.12.2014**
(21) Anmeldenummer: 11009711.0
(22) Anmeldetag: 31.08.2009
(51) Int. Cl.: A01K 63/00

(54) **Teichfilter**
Pool filter
Filtre pour bassin

(30) Priorität: 29.08.2008 DE 102008044950
(43) Veröffentlichungstag der Anmeldung: 21.03.2012
(62) Teilanmeldung aus: 09778230.4
(73) Patentinhaber: Oase GmbH, 48477 Hörstel-Riesenbeck (DE)
(72) Erfinder: Wagner, Utz, 48155 Münster (DE); Schröter, Frank, 49479 Ibbenbüren (DE); Hast, Matthias, 48147 Münster (DE); Möllers, Paul, 48346 Ostbevern (DE)
(74) Vertreter: Engelmann, Kristiana

(56) Entgegenhaltungen:
- EP-A- 0 826 637
- WO-A-2007/092988
- DE-A1- 4 119 154
- DE-A1- 10 002 397
- DE-U1- 20 221 049
- US-B1- 6 365 044

## Beschreibung

Die Erfindung betrifft einen Wasserverteiler bzw. Partikelabscheider, insbesondere zum Einsatz in einem Teichfilter, nach dem Oberbegriff des Anspruchs 1.

In der DE 41 19 154 A1 wird eine Vorrichtung zum Behandeln von Abwasser beschrieben, bei der die Strömung über ein Strömungsleitblech geleitet wird. Ähnlich ist eine Strömungsführung eines in der US 6,365,044 B1 beschriebenen Aquarien- und Fischteichfilters ausgelegt.

Der Erfindung liegt die Aufgabe zugrunde, einen Wasserverteiler bzw. Partikelabscheider zu schaffen, der einen effektiveren Energieentzug und eine bessere Turbulenzberuhigung für das ihn durchströmende Wasser gewährleistet. Diese Aufgabe wird erfindungsgemäß durch einen Wasserverteiler bzw. Partikelabscheider mit den Merkmalen des Anspruchs 1 gelöst.

Durch die Verwendung mehrerer Leitelemente, über die die Wasserströmung geführt wird, kann das einströmende Wasser äußerst effektiv turbulenzberuhigt werden und erfährt gegenüber herkömmlichen Anordnungen einen verbesserten Energieentzug. Dazu hat der Wasserverteiler mehrere seine äußere Geometrie bildende Leitelemente und einen inneren, vorzugsweise im Wesentlichen vertikalen Strömungskanal. Der Wasserverteiler ist als Lamellenabscheider ausgebildet sein, wobei die Leitelemente durch Lamellen gebildet werden. Eine Anordnung der Leitelemente derart, dass die Abströmung schräg nach oben gerichtet erfolgt, ist der gewünschten Funktion besondern förderlich. Bevorzugt werden die Leitelemente dazu unter einem Anstellwinkel von etwa 20° bis 70° geneigt angeordnet. Die Leitelemente können auch in unterschiedlichen Anstellwinkeln angeordnet sein. Die Wasserzuleitung ist bevorzugt in der oberen Hälfte des Wasserverteilers anzuordnen.

Besonders bevorzugt ist eine Ausführungsform des erfindungsgemäßen Wasserverteilers, dessen äußere Geometrie Wandungsbereiche aufweist, in denen sich jeweils Leitelemente und Ausströmöffnungen abwechseln, wobei die Leitelemente eines Wandungsbereichs versetzt zu den Leitelementen eines benachbarten Wandungsbereichs angeordnet sind.

Weitere Vorteile und Einzelheiten der Erfindung ergeben sich aus den übrigen Ansprüchen und einem Ausführungsbeispiel der Erfindung, das im Folgenden beschrieben wird; es zeigen:
- Fig. 1: eine perspektivische Darstellung eines erfindungsgemäßen Wasserverteilers,
- Fig. 2: einen Schnitt in Richtung II-II durch den Gegenstand aus Fig. 1,
- Fig. 3: einen Schnitt in Richtung III-III durch den Gegenstand aus Fig. 1 und
- Fig. 4: eine perspektivische Schnittansicht durch einen Teichfilter mit einem Wasserverteiler der vorstehenden Figuren.

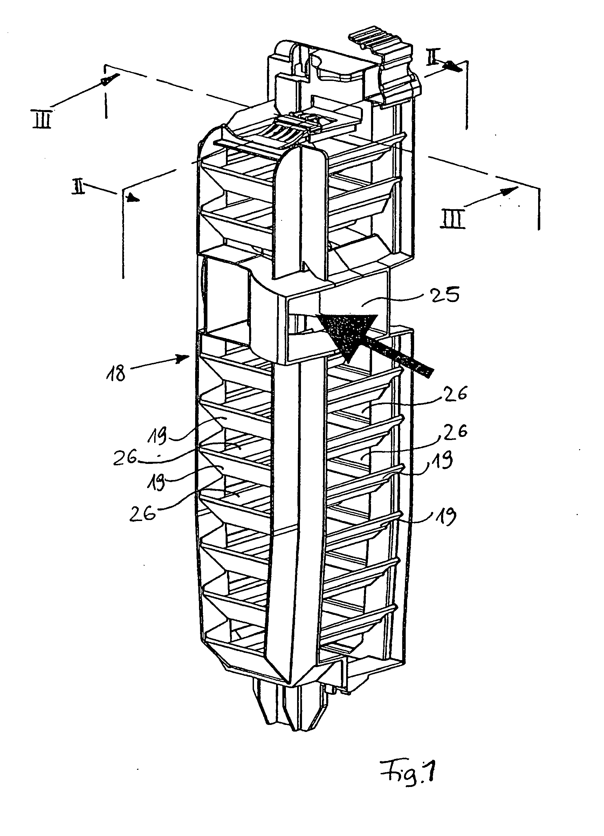

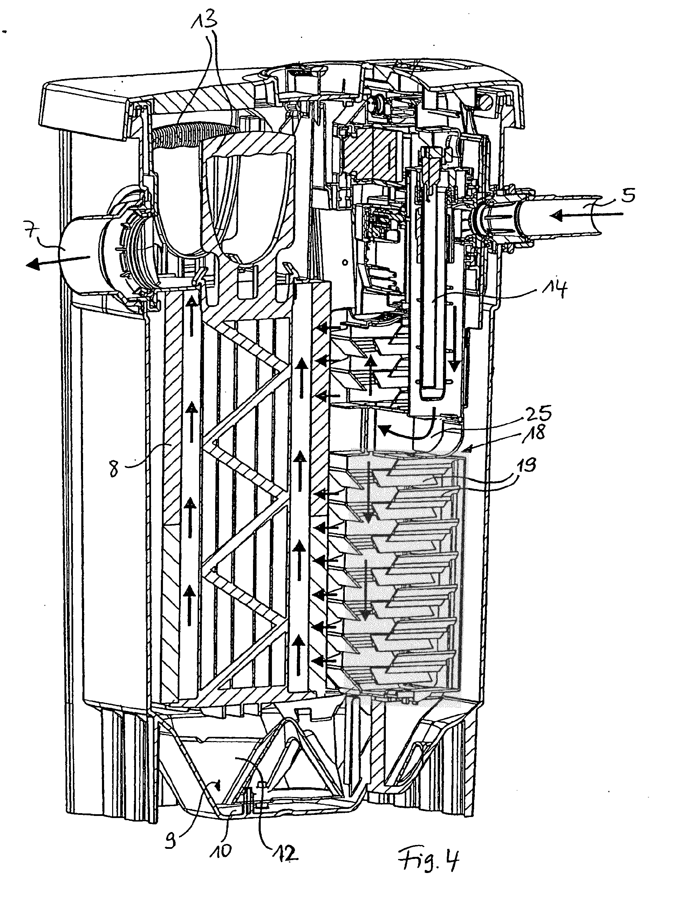

Der in Fig. 1 dargestellte Wasserverteiler 18 weist bevorzugt eine im Wesentlichen vertikale Erstreckung mit einem vertikalen Strömungskanal auf. Durch diesen strömt das Wasser nach oben und unten und verlässt den Wasserverteiler 18, von Leitelementen 19 abgelenkt, wieder nach oben gerichtet oder waagerecht. So dringt es bei Verwendung in einem Teichfilter (Fig. 4) in Filterschwämme 8 ein, die im wesentlichen nach oben durchströmt werden, und verlässt den Teichfilter anschließend durch die Wasserabfuhröffnung 7 wieder in Richtung Teich.

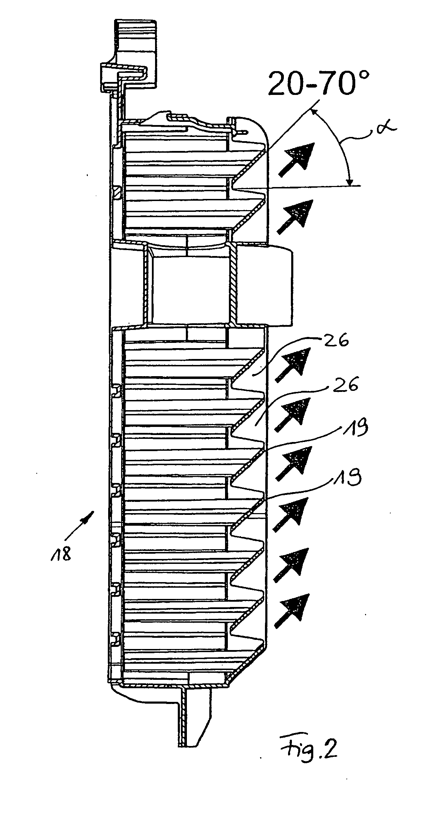

Der Wasserverteiler 18 hat im Wesentlichen zwei Eigenschaften. Zunächst dient er der Wasserverteilung bzw. -beruhigung, indem er dem einströmenden Wasser durch Brechung Energie entzieht. Das Wasser strömt durch die in Fig. 1 mit einem Pfeil gekennzeichnete Wasserzuleitung 25 in das Innere des Wasserverteilers 18 und wird dort durch die vorzugsweise als Lamellen 19 ausgebildeten Leitelemente umgelenkt und dabei beruhigt. So verlässt das Wasser den Wasserverteiler 18 wieder durch zwischen den Lamellen 19 angeordnete Ausströmöffnungen 26 und tritt ruhig und ohne Turbulenzen in einen Filterraum. Dadurch wird dort die Sedimentation von Schmutzpartikeln begünstigt. Die Leitelemente 19 des Wasserverteilers 18 sind bei der dargestellten Ausführungsform so angeordnet, dass die Abströmung schräg nach oben gerichtet erfolgt. Vorzugsweise sind sie unter einem Anstellwinkel a von 20° bis 70° nach außen oben gerichtet angeordnet, so dass das ausströmende Wasser wie in Fig. 2 durch Pfeile veranschaulicht ist, zu einer Filteroberseite abströmt. Dadurch wird eine Schlammabsetzzone im Filterbodenbereich vor Strömungen geschützt, die ein Aufwirbeln von Schmutzpartikeln zur Folge hätten.

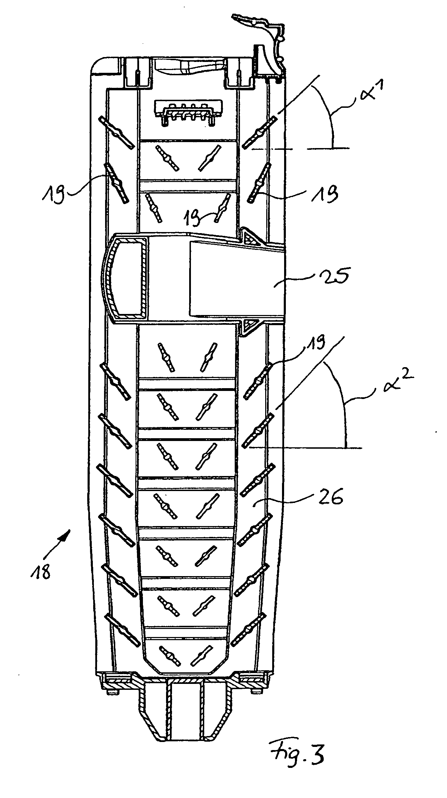

Wie Fig. 3 zeigt, können die Leitelemente 19 auch im Höhenverlauf des Wasserverteilers 18 in unterschiedlichen Anstellwinkeln α angeordnet sein, um die gerichtete Wasserabgabe in den Filterraum gezielt zu beeinflussen. Ferner ist in Fig. 1 erkennbar, dass die Leitelemente 19 benachbarter Wandungsbereiche des Wasserverteilers 18 bevorzugt zueinander versetzt angeordnet sein können, so dass die Leitelemente 19 des einen Wandungsbereichs jeweils auf Höhe der Ausströmöffnungen 26 des benachbarten Wandungsbereichs liegen. Auch dadurch wird eine Vergleichmäßigung der austretenden Wasserströmung erreicht, und Stauungen werden vermieden. Da der natürliche Strömungsverlauf ein Absinken des Wassers begünstigt, empfiehlt es sich wie bei dem dargestellten Wasserverteiler 18, die Wasserzuleitung 25 in dessen oberer Hälfte, bevorzugt im oberen Drittel bzw. wie dargestellt in der Aufteilung von ¼ zu ¾ der Wasserverteilerhöhe anzuordnen.

Die weitere wesentliche Funktion des Wasserverteilers 18 ist die eines Partikelabscheiders. Beim Auftreffen der Wasserströmung auf die Leitelemente 19 treten einzelne kleine Schlammflocken miteinander in Kontakt und verbinden sich zu größeren Flocken. Da die Absetzgeschwindigkeit von größeren Flocken höher ist, wird bereits am Wasserverteiler 18 bzw. Partikelabscheider insoweit Schlamm durch Sedimentation abgeschieden, der an den geneigten Leitelementen 19 nach unten gleitet und absinkt. Daher ist bevorzugt auch der Partikelabscheider 18 oberhalb eines Sammelraums 9 angeordnet.

Bevorzugt wird der erfindungsgemäße Wasserverteiler 18 in einem Teichfilter, beispielsweise wie in Fig. 4 dargestellt, eingesetzt. Dort ist der Wasserverlauf mit Pfeilen angedeutet. Das Wasser gelangt zunächst über eine Wasserzufuhröffnung 5, die im hier vorliegenden Fall an eine nicht dargestellte externe Filterpumpe angeschlossen ist, in ein UVC-Gerät 14, verlässt dieses untenseitig und gelangt in den Wasserverteiler 18. Anschließend durchströmt es Filterschäume 8, wobei einerseits Schmutzpartikel in und an den Filterschäumen 8 zurückgehalten werden und andererseits sich in den Filterschäumen 8 eine Besiedelung von Mikroorganismen ausbildet, so dass auch eine biologische Klärung stattfindet. Die von den Filterschäumen 8 zurückgehaltenen Schmutzpartikel sinken entlang der Filterschäume 8 ab in einen unter dem Filtermedium 8 angeordneten Sammelraum 9, der bei der dargestellten Ausführungsform mit einem Schlammsumpf 10 ausgestattet ist. In dem Sammelraum 9 befindet sich ein Absetzkegel 12, der dafür sorgt, dass der sich absetzende Schlamm sich gleichmäßig im Schlammsumpf 10 ablagert. In den Filterschäumen 8 festgesetzte Schmutzpartikel können gelöst werden, indem die Filterschäume 8 über mit Ziehgriffen 13 versehene Filterschaumhalterungen ausgequetscht werden. Die gelösten Schmutzpartikel sinken dabei nieder und lagern sich ebenfalls im Schlammsumpf 10 ab. Das gereinigte Wasser verlässt den Filter durch eine Wasserabfuhröffnung 7.

Bei Einsatz in einem Filter kann der erfindungsgemäße Partikelabscheider 18 die Filterschäume 8 in ihrer mechanischen Wirkung entlasten, die somit länger durchgängig bleiben.

## Patentansprüche

1. Wasserverteiler bzw. Partikelabscheider (18), insbesondere zum Einsatz in einem Teichfilter, mit zumindest einem Leitelement (19) durch das das Wasser einen Energieentzug erfährt, **dadurch gekennzeichnet, dass** er mehrere Leitelemente (19) aufweist, die derart angeordnet sind, dass das einströmende Wasser turbulenzberuhigt wird, wozu er als Lamellenabscheider mit seine äußere Geometrie bildenden Lamellen als Leitelemente (19) und einem inneren, vorzugsweise im wesentlichen vertikalen Strömungskanal ausgebildet ist.

2. Wasserverteiler bzw. Partikelabscheider (18) nach Anspruch 1, **dadurch gekennzeichnet, dass** die Leitelemente (19) derart angeordnet sind, dass die Abströmung schräg nach oben gerichtet erfolgt.

3. Wasserverteiler bzw. Partikelabscheider (18) nach Anspruch 1 oder 2, **dadurch gekennzeichnet, dass** die Leitelemente (19) unter einem Anstellwinkel (α) von 20° bis 70° geneigt angeordnet sind.

4. Wasserverteiler bzw, Partikelabscheider (18) nach einem der Ansprüche 1 bis 3, **dadurch gekennzeichnet, dass** eine Wasserzuleitung in der oberen Hälfte angeordnet ist.

5. Wasserverteiler bzw. Partikelabscheider (18) nach einem der Ansprüche 1 bis 4, **dadurch gekennzeichnet, dass** die Leitelemente (19) in unterschiedlichen Anstellwinkeln (α) angeordnet sind.

6. Wasserverteiler bzw. Partikelabscheider (18) nach einem der Ansprüche 1 bis 5, **dadurch gekennzeichnet, dass** seine äußere Geometrie Wandungsbereiche aufweist, in denen sich jeweils Leitelemente (19) und Ausströmöffnungen (26) abwechseln, wobei die Leitelemente (19) eines Wandungsbereichs versetzt zu den Leitelementen (19) eines benachbarten Wandungsbereichs angeordnet sind.

## Claims

1. Water distributor or particle separator (18), in particular for use in a pond filter, comprising at least one guide element (19) by means of which energy is taken away from the water, **characterised in that** said distributor or separator comprises a plurality of guide elements (19) which are arranged such that the turbulence of the inflowing water is calmed, for which purpose said distributor or separator is formed as a slat separator having slats which form the outer geometry thereof as guide elements (19) and having an inner, preferably substantially vertical flow duct.

2. Water distributor or particle separator (18) according to claim 1, **characterised in that** the guide elements (19) are arranged such that the outflow occurs diagonally upwards.

3. Water distributor or particle separator (18) according to either claim 1 or claim 2, **characterised in that** the guide elements (19) are arranged at an angle of attack (α) of from 20° to 70°.

4. Water distributor or particle separator (18) according to any of claims 1 to 3, **characterised in that** a water supply line is arranged in the upper half.

5. Water distributor or particle separator (18) according to any of claims 1 to 4, **characterised in that** the guide elements (19) are arranged at different angles of attack (α).

6. Water distributor or particle separator (18) according to any of claims 1 to 5, **characterised in that** the outer geometry thereof comprises wall portions in which guide elements (19) and outflow elements (26) alternate in each case, the guide elements (19) of one wall region being arranged at an offset from the guide elements (19) of an adjacent wall region.

## Revendications

1. Distributeur d'eau ou séparateur de particules (18), en particulier pour l'utilisation dans un filtre pour bassin, avec au moins un élément directeur (19), par lequel l'eau subit une extraction d'énergie, **caractérisé en ce qu'**il présente plusieurs éléments directeurs (19) qui sont agencés de telle manière que l'eau affluant soit tranquille au niveau des turbulences, pour quoi il est réalisé comme séparateur de lamelle avec des lamelles formant sa géométrie extérieure en guise d'éléments directeurs (19) et un canal d'écoulement intérieur, de préférence sensiblement vertical.

2. Distributeur d'eau ou séparateur de particules (18) selon la revendication 1, **caractérisé en ce que** les éléments directeurs (19) sont agencés de telle manière que l'écoulement soit effectué orienté en biais vers le haut.

3. Distributeur d'eau ou séparateur de particules (18) selon la revendication 1 ou 2, **caractérisé en ce que** les éléments directeurs (19) sont agencés inclinés sous un angle d'inclinaison (α) de 20 à 70°.

4. Distributeur d'eau ou séparateur de particules (18) selon l'une quelconque des revendications 1 à 3, **caractérisé en ce qu'**une conduite d'amenée d'eau est agencée dans la moitié supérieure.

5. Distributeur d'eau ou séparateur de particules (18) selon l'une quelconque des revendications 1 à 4, **caractérisé en ce que** les éléments directeurs (19) sont agencés dans différents angles d'inclinaison (α).

6. Distributeur d'eau ou séparateur de particules (18) selon l'une quelconque des revendications 1 à 5, **caractérisé en ce que** sa géométrie extérieure présente des zones de paroi, dans lesquelles des éléments directeurs (19) et des ouvertures d'évacuation (26) sont respectivement alternées, les éléments directeurs (19) d'une zone de paroi étant agencés en déport des éléments directeurs (19) d'une zone de paroi contiguë.
